# EUROPEAN PATENT SPECIFICATION

(11) **EP 2 475 918 B1**
(45) Date of publication and mention of the grant of the patent: **08.05.2013**
(21) Application number: 10725157.1
(22) Date of filing: 11.06.2010
(51) Int. Cl.: F16K 31/128, F16K 31/40, F16K 31/165

(54) **VALVE UNIT AND GAS METER INCLUDING SAID VALVE UNIT**
VENTILEINHEIT UND GASZÄHLER MIT DER VENTILEINHEIT
VALVE ET COMPTEUR DE GAZ COMPRENANT LADITE VALVE

(30) Priority: 08.09.2009 IT PD20090257
(43) Date of publication of application: 18.07.2012
(73) Proprietor: Sit La Precisa S.p.A. con socio unico, 35129 Padova (IT)
(72) Inventor: BORTOLIERO, Michele, I-35043 Monselice (PD) (IT); PLAIAN, Teodora, I-35020 Ponte San Nicolo' (PD) (IT); PERON, Luca, I-35010 Borgoricco (PD) (IT); TURRIN, Gianpiero, I-35137 Padova (IT)
(74) Representative: Fabris, Stefano
(86) International application number: PCT/EP2010/058260
(87) International publication number: WO 2011/029638

(56) References cited:
- EP-A1- 1 548 344
- EP-A2- 1 716 748
- WO-A1-00/79164

## Description

### Technical field

The present invention concerns a valve unit for controlling the delivery of a combustible gas, in particular for gas metering apparatuses, having the characteristics mentioned in the preamble of main claim No. 1. The invention also relates to a gas meter including the aforesaid valve unit.

### Technological background

The invention is placed particularly, although not exclusively, in the field of valve devices intended for controlling the delivery of gas in gas metering apparatuses and designed therefore for remote management of the functioning with reduced energy absorption by the actuating means used. In such specific applications it is known to control the opening and closure of the through-flow of gas within the meter, by means of shutters co-operating with respective valve seats which are associated with motorised actuating means with electrical operation. Such a system, which allows the user, by means of a remotely managed enabling signal, to cause the metering apparatus to operate, ensuring the through-flow of gas, should normally be designed to function with an extremely reduced energy absorption in the phases of opening and closure of the gas through-flow, inasmuch as the energy is provided exclusively by storage batteries, in order to ensure independence from external electrical energy sources, and which should prove efficient for a length of time equal to the service life of the meter. In such operational conditions it is therefore preferable for the motorised actuating means acting on the shutter of the gas through-flow, to be supplied with power for an extremely limited time, not absorbing energy if not in a transitory phase of the movement of opening/closing of the valve seat, so as to reduce the energy consumption, while nevertheless ensuring full functioning in the control of the shutter.

In these applications there is in addition the requirement to reduce significantly the loss of head between the sections upstream and downstream of the valve seat, and above all it is desirable for the shutter to remain in the position for opening of the valve seat, even in the absence of pressure or in the case of a drop in pressure.

In order to fulfil all the requirements indicated, a possible solution according to the prior art is disclosed in document EP 1 548 344 A1. Another possible solution would provide for the use of a valve of the pneumatic type in which the shutter is actuated via a motor and in which the main through-flow of gas is provided in a servo-assisted valve, in such a manner that the motorised actuating means acts for opening/closure of a reduced gas pathway, such as that provided in the operating circuit for assistance to the servo-valve, with the consequence of having rather modest absorbed power and reduced loss of head.

In applications in gas meters of the aforesaid type, however, it not infrequently happens that the shutter, being able to remain even for a long time in the state of closure of the seat (with meter disabled for use by the user), is subject to a kind of "sticking" on the valve seat, consequently obstructing the opening stroke produced by the motor. Since the latter is supplied with power for a limited time, in order to reduce the energy absorption, it may not be capable of lifting the shutter, owing to the resistance to movement caused by its being stuck on the valve seat, all this compromising the functioning of the valve which could remain closed or only partially open for an indefinite period. Such a limitation is obviously not acceptable in the use of such a valve unit in gas metering apparatuses.

### Description of the invention

The problem underlying the present invention is that of providing a valve unit for controlling the delivery of a combustible gas, in particular for delivery via a gas metering apparatus, and structurally and functionally designed so as to make it possible to remedy the limitations mentioned with reference to the prior art cited.

This problem is solved by the invention by means of a valve unit produced in accordance with the following claims.

### Brief description of the drawings

Further features and advantages of the invention will become clearer from the following detailed description of some preferred exemplary embodiments thereof, illustrated by way of non-limiting example with reference to the appended drawings, in which:
- Figure 1 is a schematic view in longitudinal section of a first example of a valve unit produced in accordance with the present invention,
- Figures 2 and 3 are schematic views in longitudinal section of the valve unit of Figure 1 in respective and different operating phases of the functioning of the valve unit,
- Figure 4 is a schematic view in longitudinal section of a second example of a valve unit according to the invention,
- Figure 5 is a schematic view in partial section of a gas metering apparatus equipped with a valve unit produced in accordance with the invention.

### Preferred embodiments of the invention

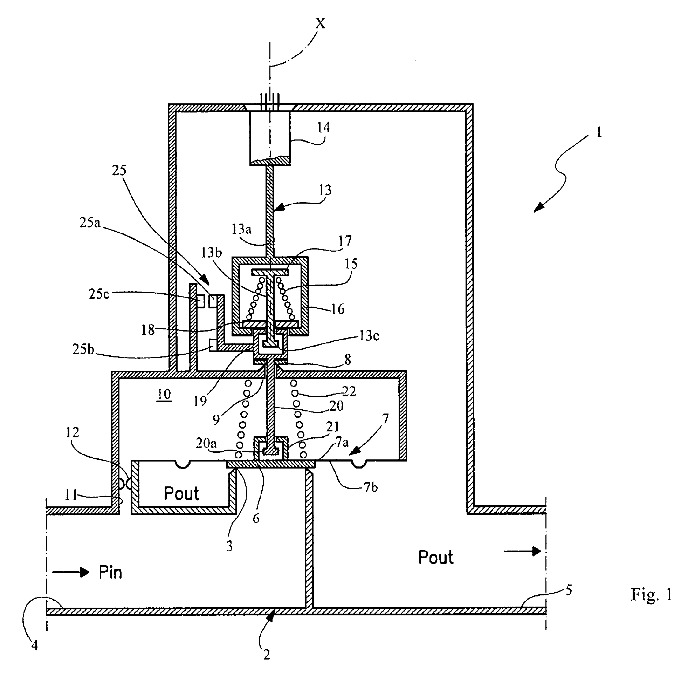

With initial reference to Figures 1 to 3, the reference 1 indicates as a whole a valve unit, shown only schematically, designed for controlling the delivery of a combustible gas, via a gas metering apparatus 1a, only shown in part. The valve unit is arranged in a main gas through-flow pipe, indicated by 2, and comprises a valve seat 3 placed between and inlet section 4 and an outlet section 5 of the pipe. The valve seat 3 is arranged to co-operate with a shutter member 6, with diaphragm control 7, as will be described in more detail hereinafter. In the valve unit the valve seat 3 with shutter 6 is designed as a servovalve and is therefore provided with a servo-assistance control supplied by a second shutter 8 co-operating with a respective second valve seat 9, arranged in an operating circuit. More particularly, an operating chamber 10 is provided for the control of the main servovalve, which chamber communicates with the inlet section 4, upstream of the seat 3, by means of an operating pipe 11, equipped with a suitable neck or constriction 12.

The operating chamber 10 is bounded in part by one side 7a of the diaphragm 7 to which the shutter 6 is firmly secured, and is placed in communication with the outlet section 5 of the pipe 2 via the opening defined by the valve seat 9 associated with the shutter 8. In this way, as will become clear in the continuation of the description, the operation of the main shutter 6 is controlled by the opening/closing of the second servo-assistance shutter 8.

Preferably, the valve seats 3, 9 with the corresponding shutters 6, 8 are mounted coaxially with each other in an axial direction designated by X, along which the actuating strokes of the shutters themselves away from and towards the respective valve seats take place.

For the operation of the shutters, provision is made for the shutters to be secured to an actuating rod, indicated as a whole by 13, which is operatively connected to a motor 14, suitable for driving the rod in the translational movement along the axis X. Provision is conveniently made for the motor 14, which is for example electric, to be selected and arranged for absorbing a reduced power, assuming that it must be supplied with power by a battery mounted in the gas meter, with total independence from the electrical mains system, with the battery having to ensure a long life, relative to the service life of the gas meter. For this purpose, provision is made for the motor to be supplied with power, in the phase of actuation of the actuating rod, for a limited period of time, so as to limit the energy consumption but, in accordance with the invention, nonetheless ensuring the opening and/or closing of the valve seats.

To this end, the actuating rod 13 is secured to the shutters 6 and 8 so as to be able to slide in a limited manner with respect thereto, with a predetermined play in the corresponding coupling, such that the rod is movable by means of the motor 14, without interference with one and/or the other of said shutters, along at least a portion of the lifting stroke thereof and also in opposition to the action of a return spring 15, in order to store resilient energy (by means of compression of the spring) and to transfer said energy to the shutters, so as to urge them away from the valve seats and ensure opening for the through-flow of gas in the main pipe.

In more detail, the actuating rod 13 comprises a first part 13a and a second part 13b, extending in prolongation of each other and also connected so as to be able to slide in a limited manner in the axial direction X. The first part 13a is provided with a bush formation 16 and the second part 13b comprises a rod-shaped portion with an end head 17 which is received and slidably held in the bush 16. Between the head 17 and an end of the bush 16 a spring 15 acts. Preferably, the ends of the spring are abutted by the head 17 and, on the axially opposed side, by a small plate 18 axially guided in the bush, the plate and the spring being slipped coaxially onto the rod-shaped portion of the second rod part.

At the free end of the rod-shaped portion, on the opposite side from the head, an enlargement 13c of the rod is provided, suitable for being held so as to be able to slide in a limited manner inside a second bush 19, with a predetermined axial coupling play. The shutter 8 is connected to the bush 9.

A third rod-shaped part 20 of the actuating rod extends in prolongation of the first and second part, coaxially therewith, the part 20 being firmly secured at one end to the shutter 8 and having at the opposed axial end an enlargement 20a suitable for being held, so as to be slidable in a limited manner, with a predetermined coupling play, inside a third bush 21 to which the shutter 6 is secured and, integral therewith, the diaphragm 7.

The reference 22 indicates a resilient return spring acting on the main shutter 6 and capable of urging same towards the position for closure of the corresponding valve seat 3.

The reference 25 indicates as a whole a position sensor operatively associated with the shutter 8. Said sensor, preferably of the Hall effect type, comprises respective members 25a, 25b, 25c co-operating with one another and with which the position of the shutter 8 is detected, in its movement in the axial direction X, with respective signals indicating the closing and opening positions of the valve seat 9 on which the shutter 8 acts.

In operation, starting from the configuration in Figure 1, in which the valve seats 3 and 9 are both intercepted by the closing of the respective shutters (the closed position is detected by the sensor 25), the gas through-flow in the pipe 2 is opened in the manner described below.

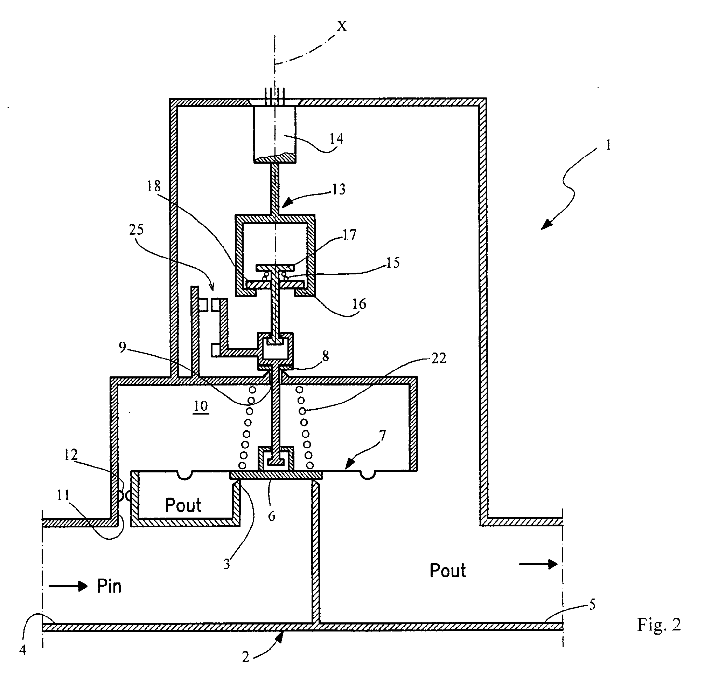

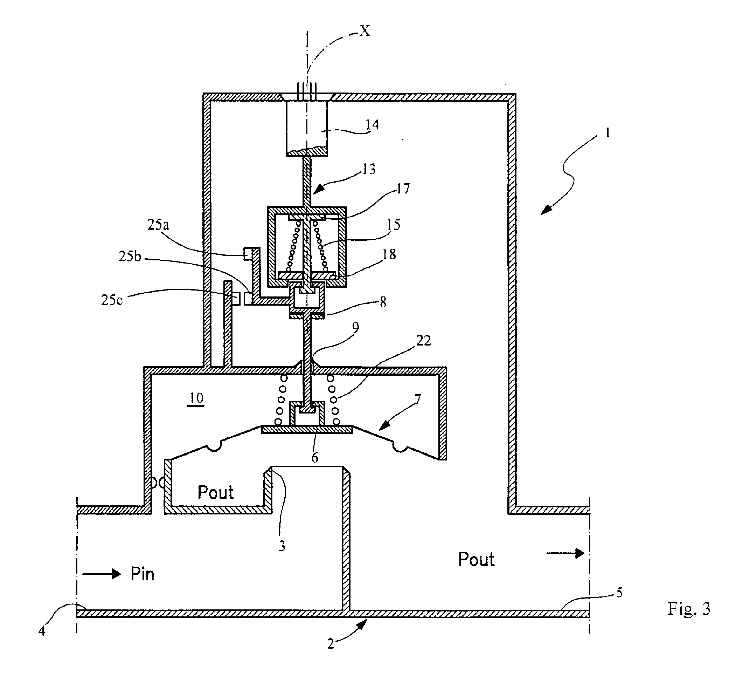

When the motor 14 is actuated, the actuating rod 13 is raised, initially effecting the opening of the valve seat 9 of the servo circuit (Figure 2), by which the pressure in the operating chamber 10 is relieved and the pressure signal is brought to the outlet portion 5 where it acts on the diaphragm side 7b, opposed to the side 7a. A further lifting stroke of the rod 13 causes the axial coupling play within the bush 21 to be taken up, and once the play is zeroed, the shutter 6 is raised together with the diaphragm 7, in opposition to the action of the spring 22, until the state of complete opening of the valve seat 3 is reached, with the consequent through-flow of gas in the pipe 2 (Figure 3).

In applications of the valve unit according to the invention in gas meters it happens not infrequently that one or both of the shutters offer a certain resistance to detachment from their valve seat during the lifting stroke of the actuating rod. This event is linked to the fact that, since the shutters can remain for a long time in the closed position, that is, during the periods in which the meter is deactivated or not prepared for use, they are subject to a phenomenon known as "sticking" on the valve seat, with respect to which the motor may not succeed in completing the opening of the valve seat in the (reduced) time during which the motor is supplied with power. When the sticking phenomenon is detected in the main shutter, it may occur that at the end of the stroke which completes the opening of the shutter 8 of the servo circuit, the main shutter 6 is not detached from its seat, and in that case does not ensure the opening of the main valve.

The valve unit according to the invention makes it possible to remedy the above-mentioned limitations, owing to the action of storage and subsequent release of resilient energy which is effected by means of the spring 15.

Owing to the possibility of limited free relative sliding between the parts 13a, 13b of the actuating rod, the motor 14, when supplied with power, is able to raise the part 13a even when one or both of the shutters 6,8 are stuck to their seats, the resistance offered to the force produced by the motor being reduced in this case. During this stroke, energy of a resilient nature is still stored, via the compression of the spring 15, which energy is released and transmitted to the shutter (to one or both), even when the brief time in which the motor is supplied with power has passed, the force remaining applied to the shutter until it is lifted away from its valve seat. The result is that the force with which the shutter is urged is not limited to the time interval in which the motor is actuated, but instead remains applied also for a following period until the resistance offered by any sticking phenomena occurring between the shutters and the valve seats is overcome. Figure 2 illustrates the transitory state in which, because of the temporary sticking of the shutters, the lifting of the actuating rod includes the compression of the spring 15. In this phase the motor nevertheless carries out the predetermined stroke although the shutters remain in the position for closure of the respective valve seats, the closed position continuing to be detected by the sensor 25. As a result of the resilient action of the spring 15, exerted on the shutters, the state illustrated in Figure 3 is reached, in which the opening of the respective valve seats takes place, with the open position being detected by the sensor 25.

It should also be noted that the spring 15, besides performing the function of accumulating energy and therefore force for the opening of the valve (when compressed during the lifting of the actuating rod), also performs the function of a closure means for the shutter 8 on the corresponding seat 9, when the part 13a is brought into contact with the head 17 of the part 13b. In this movement the thrust is exerted by the plate 18.

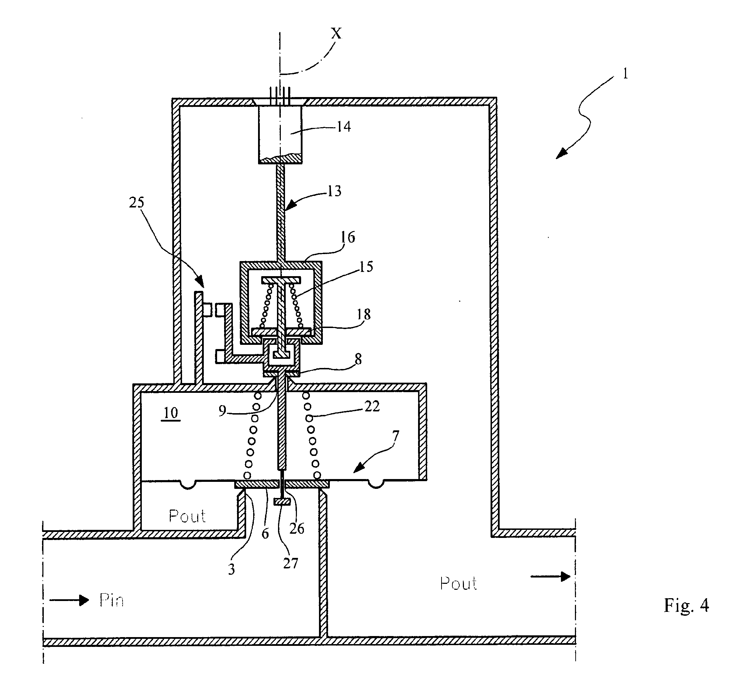

With reference to Figure 4, a second exemplary embodiment of the invention, in which details analogous to those of the previous example are designated by the same reference numbers, differs from the previous one principally in that it provides, as an alternative to the operating pipe 11, an opening 26 passing through the shutter 6, and suitable for placing the inlet section 4 in communication with the operating chamber and defining a valve seat capable of being intercepted selectively by means of a shutter member 27. Said shutter is firmly secured to the third part 20 of the actuating rod, coaxially with the shutter 6 and the latter is firmly secured exclusively to the diaphragm 7. The reference 22 indicates the resilient return spring of the shutter 6, acting between a stationary part of the unit and the shutter 6, as is clearly illustrated in Figure 4.

The provision of the shutter 27 makes it possible, according to this variant, to avoid the arrangement of the constriction 12 or another similar delivery nozzle in the pipe 11. Since the cross-section of the constriction must be extremely reduced in width with respect to the cross-section of the valve seat 9, which relieves the pressure in the operating chamber, there is a risk of obstruction of the operating pipe, owing to the impurities present in the gas delivered, which risk is increased by the fact that a continuous flow of gas is in any case delivered via the constriction.

On the other hand, in the variant of Figure 4, this possible problem is avoided owing to the provision of the shutter 27, which does not require the provision of any delivery nozzle.

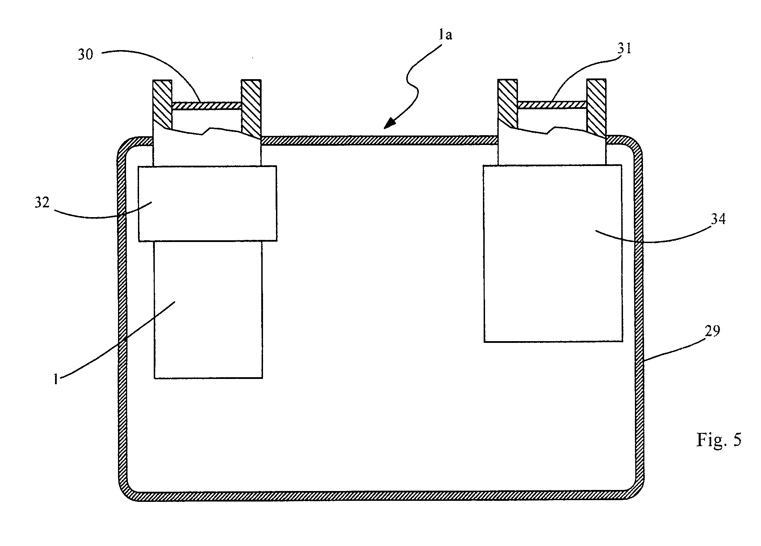

Figure 5 shows schematically, in partial section, a casing 29 of the gas meter 1a, including the valve unit of the present invention. The meter, designed for remote control and also for local actuation by the user, provides in the casing 29 a gas inlet section with an inlet filter 30 and a gas outlet section with a corresponding outlet filter 31. Downstream of the inlet section there is also provided an optional safety device against overheating, indicated by 32 and designed as a kind of "thermal fuse", having the function of intercepting the gas through-flow when predetermined thermal levels are exceeded.

Downstream of the safety device 32 is mounted the valve unit 1 described in the preceding examples, by means of which the flow of gas is delivered to a measuring device 34 with a respective sensor, with which the volume of gas delivered by the meter is determined.

The invention thus achieves the aims proposed, remedying the limitations mentioned with reference to the prior art and obtaining numerous advantages.

A principal advantage lies in the fact that by means of the valve unit according to the invention, in applications in gas meters, with motorised actuators with a low energy absorption it is possible to ensure the opening of the valve seats even in the event of not infrequent phenomena of "sticking" of the valve seats, rendering the control of the gas delivery via the gas through-flow reliable and efficient. According to the invention, in which there is conveniently provided a servo-assisted valve unit with the main shutter having a diaphragm control subjected to different pressures on the opposed sides thereof, it is possible to ensure low energy absorption of the motor, the latter being supplied with power in a transitory phase of actuation and integrating the energy of the motor with the release of energy stored in the phase of actuation of the motor itself in a resilient member, for example a spring, the resilient action of which is then applied to the shutters, also following the phase during which the motor is supplied with power.

## Claims

1. Valve unit for controlling the delivery of a combustible gas, in particular for delivery via a gas metering apparatus including a main gas through-flow pipe (2), the unit comprising:
- a servovalve with a first valve seat (3) provided on said pipe and associated with a respective first shutter (6) with diaphragm control (7) for the opening of said seat (3) in opposition to a first return spring (22),
- an operating chamber (10) for controlling the servovalve, the chamber being in communication with an inlet section (4) of the main pipe (2), upstream of said first valve seat (3), one side (7a) of said diaphragm (7) being subjected to the pressure prevailing in said chamber (10), the other side (7b) being subjected to the pressure prevailing downstream of the first valve seat, in the region of an outlet section (5) of said pipe (2),
- said operating chamber (10) being in communication with said outlet section (5) via a second valve seat (9) co-operating with a second shutter (8),
- an actuating rod (13) being operatively associated with said first and said second shutter (6, 8), for controlling same for the opening or closing of the respective seats (3, 9),
- a drive means (14) being associated with said actuating rod (13) in order to move said shutters (6, 8) away from and towards the respective valve seats (3, 9),
**characterized in that** said actuating rod (13) is secured to at least said first shutter (6) so as to be able to slide in a limited manner with respect thereto, with a predetermined play, such that the rod is movable by means of the actuation of said drive means (14), without interference with the first shutter (6) along at least a portion of the lifting stroke of said shutter (6) and also in opposition to the resilient action of a return means (15), in order to store energy in said return means (15) and transfer it to said first shutter (6) in order to urge this away from the valve seat (3) and ensure opening for the through-flow of gas in the main pipe (2).

2. Valve unit according to claim 1, wherein said actuating rod (13) is further secured to the second shutter (8) so as to be able to slide in a limited manner with respect thereto, with a predetermined play, such that the rod is movable by means of the actuation of said drive means, along at least part of said portion of lifting stroke, without interfering with the first (6) and/or with the second shutter (8) and also in opposition to the resilient action of said return means (15) for the purpose of storing resilient energy and transferring it to the first shutter (6) and/or to the second shutter (8) in order to urge these away from the respective valve seats (3, 9) and thus ensure opening for the through-flow of gas in the main pipe (2).

3. Valve unit according to claim 1 or 2, wherein said first and said second shutter (6, 8) and said actuating rod (13) are coaxial with one another.

4. Valve unit according to claim 3, wherein said first and said second shutter (6, 8) are secured to the actuating rod (13) so as to be able to slide in a limited manner along the axial direction of movement of the actuating rod away from and towards said valve seats (3, 9).

5. Valve unit according to any one of the preceding claims, wherein said actuating rod (13) comprises a first and a second part (13a, 13b) which are operatively associated in prolongation of each other, and said return means comprises at least one spring (15) acting between respective abutment surfaces of said parts, said spring (15) being capable of storing resilient energy in relative motion between said parts (13a, 13b) during the lifting stroke of the rod (13) for opening the valve seats (3, 9).

6. Valve unit according to claim 5, wherein said first rod part (13a) comprises a bush formation (16) and the second part (13b) comprises a rod-shaped portion guided axially in said bush, one end of said portion having a head (17) capable of being slidably held in the bush (16), said spring (15) acting between said head (17) and the corresponding abutment surface of said bush (16).

7. Valve unit according to claim 6, wherein the abutment surface in the first rod part (13a) is integral with said bush (16).

8. Valve unit according to claim 6, wherein the abutment surface in the first rod part (13a) comprises a small plate (18) slidably received in said bush (16) and also axially held between the opposed axial ends thereof.

9. Valve unit according to any one of the preceding claims, wherein the second rod part, on the axially opposed side from said head, has an enlarged end (13c) suitable for being held so as to be able to slide in a limited manner, with a predetermined axial play, in a second bush (19) to which the second shutter (8) is secured.

10. Valve unit according to claim 9, wherein said actuating rod (13) comprises a third rod-shaped part (20) extending between the first and the second shutter (6, 8) and suitable for connecting same.

11. Valve unit according to claim 10, wherein said third part (20) comprises two portions secured to each other so as to be able to slide in a limited manner with respect to each other in the axial direction.

12. Valve unit according to claim 11, wherein the portion of said third rod part (20) secured to the first shutter (6) comprises said second bush (19) capable of axially holding, so as to be able to slide in a limited manner, one end of the other portion secured to the second shutter (8).

13. Valve unit according to claim 9, wherein said rod comprises a third rod-shaped part (20) connected to the second shutter and extending so as to pass through a through opening (26) provided in the first shutter (6), a third shutter (27) being mounted on said rod at the end closest to the first shutter (6) and which is capable of co-operating with the valve seat defined by said opening (27) for selectively placing the operating chamber (10) in communication with the inlet section (4) of the main pipe (2) by means of the movement of said actuating rod (13).

14. Gas metering apparatus arranged for remote control and local actuation comprising a valve unit for controlling the delivery of a combustible gas, produced in accordance with one or more of the preceding claims.

## Patentansprüche

1. Ventileinheit zum Steuern der Abgabe eines brennbaren Gases, insbesondere zur Abgabe über ein Gaszählergerät mit einem Hauptgasdurchflussrohr (2), wobei die Einheit umfasst:
- ein Servoventil mit einem ersten Ventilsitz (3), das an dem Rohr vorgesehen ist und einem zugehörigen ersten Verschluss (6) mit Membransteuerung (7) zum Öffnen des Sitzes (3) gegen eine erste Rückstellfeder (22) zugeordnet ist,
- eine Betriebskammer (10) zum Ansteuern des Servoventils, wobei die Kammer mit einem Einlassabschnitt (4) des Hauptrohrs (2) in kommunizierender Verbindung steht, wobei im Bereich eines Auslassabschnitts (5) des Rohrs (2), dem ersten Ventilsitz (3) vorgeschaltet, eine Seite (7a) der Membran (7) mit dem in der Kammer (10) vorherrschenden Druck beaufschlagt ist, die andere Seite (7b) mit dem Druck beaufschlagt ist, der dem ersten Ventilsitz nachgeordnet vorherrschend ist,
- wobei die Betriebskammer (10) mit dem Auslassabschnitt (5) über einen zweiten Ventilsitz (9) in kommunizierender Verbindung steht, der mit einem zweiten Verschluss (8) kooperiert,
- wobei eine Betätigungsstange (13) dem ersten und dem zweiten Verschluss (6, 8) in Wirkverbindung zugeordnet ist, um diese zum Öffnen oder Schließen der zugehörigen Sitze (3, 9) zu betätigen,
- wobei ein Antriebsmittel (14) der Betätigungsstange (13) zugeordnet ist, um die Verschlüsse (6, 8) von den zugehörigen Ventilsitzen (3, 9) weg und zu diesen hin zu bewegen,
**dadurch gekennzeichnet, dass** die Betätigungsstange (13) mindestens an dem ersten Verschluss (6) so befestigt ist, dass sie in begrenztem Umfang, mit einem vorgegebenen Spiel, derart daran verschiebbar ist, dass die Stange durch Betätigung der Antriebsmittel (14) entlang mindestens eines Teils des Hebehubs des Verschlusses (6) und auch entgegen der Federwirkung eines Rückstellmittels (15) bewegbar ist, ohne dass es zu Beeinträchtigungen mit dem ersten Verschluss (6) kommt, um in dem Rückstellmittel (15) Energie zu speichern und sie zum ersten Verschluss (6) zu übertragen, um diesen vom Ventilsitz (3) weg zu drücken und ein Öffnen für den Durchfluss von Gas in das Hauptrohr (2) zu gewährleisten.

2. Ventileinheit nach Anspruch 1, bei der die Betätigungsstange (13) weiter am zweiten Verschluss (8) so befestigt ist, dass sie in begrenztem Umfang, mit einem vorgegebenen Spiel, derart daran verschiebbar ist, dass die Stange durch Betätigung der Antriebsmittel entlang mindestens eines Teils des Hebehubs bewegbar ist, ohne dass es zu Beeinträchtigungen mit dem ersten (6) und/oder dem zweiten Verschluss (8) kommt und auch entgegen der Federwirkung des Rückstellmittels (15), zum Zwecke des Speicherns von Federenergie und ihrer Übertragung an den ersten Verschluss (6) und/oder den zweiten Verschluss (8), um diese von den zugehörigen Ventilsitzen (3, 9) weg zu drücken und damit ein Öffnen für den Durchfluss von Gas in das Hauptrohr (2) zu gewährleisten.

3. Ventileinheit nach Anspruch 1 oder 2, bei der der erste und der zweite Verschluss (6, 8) und die Betätigungsstange (13) zueinander koaxial sind.

4. Ventileinheit nach Anspruch 3, bei der der erste und der zweite Verschluss (6, 8) an der Betätigungsstange (13) derart befestigt sind, dass sie in begrenztem Umfang entlang der axialen Bewegungsrichtung der Betätigungsstange von den Ventilsitzen (3, 9) weg und zu diesen hin verschiebbar sind.

5. Ventileinheit nach einem der vorhergehenden Ansprüche, bei der die Betätigungsstange (13) einen ersten und einen zweiten Teil (13a, 13b) umfasst, die einander in Verlängerung in Wirkverbindung zugeordnet sind, und das Rückstellmittel mindestens eine Feder (15) umfasst, die zwischen zugehörigen Anschlagflächen dieser Teile wirkt/wirken, wobei die Feder (15) geeignet ist, Federenergie in Relativbewegung zwischen den Teilen (13a, 13b) beim Hebehub der Stange (13) zum Öffnen der Ventilsitze (3, 9) zu speichern.

6. Ventileinheit nach Anspruch 5, bei der der erste Stangenteil (13a) eine Buchsenformation (16) umfasst und der zweite Teil (13b) einen stabförmigen Abschnitt umfasst, der axial in der Buchse geführt ist, wobei ein Ende des Abschnitts einen Kopf (17) aufweist, der in der Buchse (16) verschiebbar gehalten werden kann, wobei die Feder (15) zwischen dem Kopf (17) und der korrespondierenden Anschlagfläche der Buchse (16) wirksam ist.

7. Ventileinheit nach Anspruch 6, bei der die Anschlagfläche im ersten Stangenteil (13a) mit der Buchse (16) integral ausgebildet ist.

8. Ventileinheit nach Anspruch 6, bei der die Anschlagfläche im ersten Stangenteil (13a) ein Plättchen (18) umfasst, das verschiebbar in der Buchse (16) aufgenommen und auch zwischen ihren gegenüberliegenden axialen Enden axial gehalten ist.

9. Ventileinheit nach einem der vorhergehenden Ansprüche, bei der der zweite Stangenteil, auf der axial gegenüberliegenden Seite vom Kopf, ein vergrößertes Ende (13c) aufweist, das geeignet ist, dass es so gehalten wird, dass es in begrenztem Umfang, mit einem vorgegebenen axialen Spiel, in einer zweiten Buchse (19) verschiebbar ist, an der der zweite Verschluss (8) befestigt ist.

10. Ventileinheit nach Anspruch 9, bei der die Betätigungsstange (13) einen dritten stangenförmigen Teil (20) umfasst, der sich zwischen dem ersten und dem zweiten Verschluss (6, 8) erstreckt und geeignet ist, diese zu verbinden.

11. Ventileinheit nach Anspruch 10, bei der der dritte Teil (20) zwei Abschnitte umfasst, die so aneinander befestigt sind, dass sie in begrenztem Umfang in axialer Richtung zueinander verschiebbar sind.

12. Ventileinheit nach Anspruch 11, bei der der am ersten Verschluss (6) befestigte Abschnitt des drittten Stangenteils (20) die zweite Buchse (19) umfasst, die geeignet ist, ein Ende des anderen Abschnitts, der am zweiten Verschluss (8) befestigt ist, so zu halten, dass es in begrenztem Umfang verschiebbar ist.

13. Ventileinheit nach Anspruch 9, bei der die Stange einen dritten stangenförmigen Teil (20) umfasst, der mit dem zweiten Verschluss verbunden ist und sich so erstreckt, dass er durch eine durchgehende Öffnung (26) verläuft, die im ersten Verschluss (6) vorgesehen ist, wobei ein dritter Verschluss (27) an der Stange an dem Ende angebracht ist, das dem ersten Verschluss (6) am nächsten gelegen ist und geeignet ist, mit dem Ventilsitz zu kooperieren, der durch die Öffnung (27) definiert ist, um die Betriebskammer (10) selektiv mit dem Einlassabschnitt (4) des Hauptrohrs (2) mittels Bewegung der Betätigungsstange (13) in kommunizierende Verbindung zu bringen.

14. Gasmessgerät, das für Fernsteuerung und lokale Betätigung ausgebildet ist, umfassend eine Ventileinheit zum Steuern der Abgabe eines brennbaren Gases, das gemäß einem oder mehreren der vorhergehenden Ansprüche hergestellt ist.

## Revendications

1. Unité de soupape destinée à commander la fourniture d'un gaz combustible, en particulier pour la fourniture par l'intermédiaire d'un appareil de mesure de gaz comprenant un tuyau de passage de gaz principal (2), l'unité comportant :
- une servo-soupape avec un premier siège de soupape (3) prévue sur ledit tuyau et associée à un premier volet respectif (6) avec un diaphragme de commande (7) pour l'ouverture dudit siège (3) en opposition à un premier ressort de rappel (22),
- une chambre d'actionnement (10) destinée à commander la servo-soupape, la chambre étant en communication avec une section d'entrée (4) du tuyau principal (2), en amont dudit premier siège de soupape (3), un côté (7a) dudit diaphragme (7) étant soumis à la pression qui règne dans ladite chambre (10), l'autre côté (7b) étant soumis à la pression qui règne en aval du premier siège de soupape, dans la zone d'une section de sortie (5) dudit tuyau (2),
- ladite chambre d'actionnement (10) étant en communication avec ladite section de sortie (5) par l'intermédiaire d'un deuxième siège de soupape (9) coopérant avec un deuxième volet (8),
- une tige d'actionnement (13) qui est associée de manière opérationnelle audit premier et audit deuxième volet (6, 8), afin de les commander pour l'ouverture ou la fermeture des sièges respectifs (3, 9),
- des moyens d'entraînement (14) qui sont associés à ladite tige d'actionnement (13) afin de déplacer lesdits volets (6, 8) à l'écart de et vers les sièges de soupape respectifs (3, 9),
**caractérisé en ce que** ladite tige d'actionnement (13) est fixée sur au moins ledit premier volet (6) de façon à pouvoir coulisser d'une manière limitée par rapport à celui-ci, avec un jeu prédéterminé, de telle sorte que la tige est mobile au moyen de l'actionnement desdits moyens d'entraînement (14), sans interférence avec le premier volet (6) le long d'au moins une partie de la course de levée dudit volet (6) et également en opposition à l'action élastique de moyens de rappel (15), afin d'emmagasiner de l'énergie dans lesdits moyens de rappel (15) et la transférer vers ledit premier volet (6) afin de pousser celui-ci à l'écart du siège de soupape (3) et assurer l'ouverture pour le passage du gaz dans le tuyau principal (2).

2. Unité de soupape selon la revendication 1, dans laquelle ladite tige d'actionnement (13) est en outre fixée sur le deuxième volet (8) de façon à pouvoir coulisser d'une façon limitée par rapport à celui-ci, avec un jeu prédéterminé, de telle sorte que la tige est mobile au moyen de l'actionnement desdits moyens d'entraînement, le long d'au moins une partie de ladite partie de course de levée, sans interférer avec le premier (6) et/ou le deuxième volet (8) et également en opposition à l'action élastique desdits moyens de rappel (15) afin d'emmagasiner de l'énergie élastique et la transférer au premier volet (6) et/ou au deuxième volet (8) afin de pousser ces derniers à l'écart des sièges de soupape respectifs (3, 9) et assurer ainsi l'ouverture pour le passage du gaz dans le tuyau principal (2).

3. Unité de soupape selon la revendication 1 ou 2, dans laquelle ledit premier et ledit deuxième volet (6, 8) et ladite tige d'actionnement (13) sont coaxiaux l'un par rapport à l'autre.

4. Unité de soupape selon la revendication 3, dans laquelle ledit premier et ledit deuxième volet (6, 8) sont fixés sur la tige d'actionnement (13) de façon à pouvoir coulisser d'une manière limitée le long de la direction axiale de mouvement de la tige d'actionnement à l'écart de et vers lesdits sièges de soupape (3, 9).

5. Unité de soupape selon l'une quelconque des revendications précédentes, dans laquelle ladite tige d'actionnement (13) comporte une première et deuxième partie (13a, 13b) qui sont associées de manière opérationnelle dans le prolongation l'une de l'autre, et lesdits moyens de rappel comportent au moins un ressort (15) agissant entre des surfaces de butée respectives desdites parties, ledit ressort (15) étant capable d'emmagasiner de l'énergie élastique dans le mouvement relatif entre lesdites parties (13a, 13b) pendant la course de levée de la tige (13) pour ouvrir les sièges de soupape (3, 9).

6. Unité de soupape selon la revendication 5, dans laquelle ladite première partie de tige (13a) comporte une formation de manchon (16) et la deuxième partie (13b) comporte une partie en forme de tige guidée axialement dans ledit manchon, une extrémité de ladite partie ayant une tête (17) capable d'être maintenue de façon coulissante dans le manchon (16), ledit ressort (15) agissant entre ladite tête (17) et la surface de butée correspondante dudit manchon (16).

7. Unité de soupape selon la revendication 6, dans laquelle la surface de butée dans la première partie de tige (13a) est d'un seul tenant avec ledit manchon (16).

8. Unité de soupape selon la revendication 6, dans laquelle la surface de butée dans la première partie de tige (13a) comporte une petite plaque (18) reçue de façon coulissante dans ledit manchon (16) et également axialement maintenue entre ses extrémités axiales opposées.

9. Unité de soupape selon l'une quelconque des revendications précédentes, dans laquelle la deuxième partie de tige, sur le côté axialement opposé à ladite tête, a une extrémité agrandie (13c) prévue pour être maintenue de façon à pouvoir coulisser d'une manière limitée, avec un jeu axial prédéterminé, dans un deuxième manchon (19) sur lequel le deuxième volet (8) est fixé.

10. Unité de soupape selon la revendication 9, dans laquelle ladite tige d'actionnement (13) comporte une troisième partie en forme de tige (20) s'étendant entre le premier et le deuxième volet (6, 8) et prévue pour les raccorder.

11. Unité de soupape selon la revendication 10, dans laquelle ladite troisième partie (20) comporte deux parties fixées l'une à l'autre de façon à pouvoir coulisser d'une manière limitée l'une par rapport à l'autre dans la direction axiale.

12. Unité de soupape selon la revendication 11, dans laquelle la partie de ladite troisième partie de tige (20) fixée sur le premier volet (6) comporte ledit deuxième manchon (19) capable de maintenir axialement, de façon à pouvoir coulisser d'une manière limitée, une extrémité de l'autre partie fixée sur le deuxième volet (8).

13. Unité de soupape selon la revendication 9, dans laquelle ladite tige comporte une troisième partie en forme de tige (20) reliée au deuxième volet et s'étendant de façon à passer à travers une ouverture (26) prévue dans le premier volet (6), un troisième volet (27) étant monté sur ladite tige à l'extrémité la plus proche du premier volet (6) et qui est capable de coopérer avec le siège de soupape défini par ladite ouverture (27) afin de placer de manière sélective la chambre d'actionnement (10) en communication avec la section d'entrée (4) du tuyau principal (2) au moyen du mouvement de ladite tige d'actionnement (13).

14. Appareil de mesure de gaz prévu pour une commande à distance et un actionnement local comportant une unité de soupape destinée à commander la fourniture d'un gaz combustible, fabriquée selon l'une quelconque des revendications précédentes.
